# DEMANDE DE BREVET EUROPEEN

(11) **EP 4 815 274 A1**
(43) Date de publication de la demande: **30.09.2026**
(21) Numéro de dépôt: 26167075.6
(22) Date de dépôt: 24.03.2026
(51) Int. Cl.: H02K 55/02, H02K 3/24

(54) **MOTEUR SUPRACONDUCTEUR COMPORTANT DES BOBINES EMPILÉES**

(30) Priorité: 28.03.2025 FR 2503206
(71) Demandeur: Airbus (S.A.S.), 31700 Blagnac (FR)
(72) Inventeur: COLLE, Alexandre, 31700 Blagnac (FR); ABDOUH, Reda, 31700 Blagnac (FR); DORGET, Rémi, 31700 Blagnac (FR)
(74) Mandataire: Cabinet Le Guen Maillet

(57) **Abrégé**

L'invention concerne un moteur supraconducteur (100) comportant un rotor (102) portant des aimants permanents (110) et mobiles en rotation autour d'un axe longitudinal (X), un stator (103) traversé par des orifices (116) répartis autour du rotor (102), et pour chaque orifice (116), deux bobines (150) constituées d'un matériau supraconducteur et alimentées électriquement pour générer un champ magnétique, où chaque bobine (150) comporte une première section rectiligne (152a) traversant ledit orifice (116), une deuxième section rectiligne (152b) traversant un autre orifice (116), et deux sections courbes (154a-b) où chacune relie entre elles une extrémité de la première section rectiligne (152a) et une extrémité de la deuxième section rectiligne (152b), où les sections rectilignes (152a) des deux bobines (150) traversant ledit orifice (116) sont empilées radialement.

La disposition particulière des bobines permet de limiter les pertes.

## Description

### DOMAINE TECHNIQUE

La présente invention se rapporte au domaine général des moteurs supraconducteurs et en particulier à un moteur supraconducteur comportant des bobines empilées, ainsi qu'un aéronef comportant au moins un tel moteur supraconducteur.

### ÉTAT DE LA TECHNIQUE ANTÉRIEURE

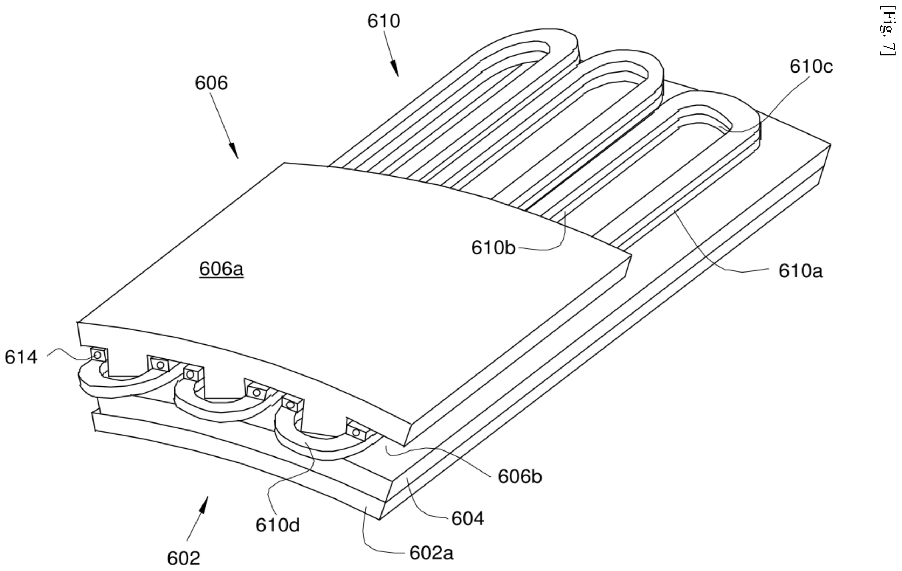

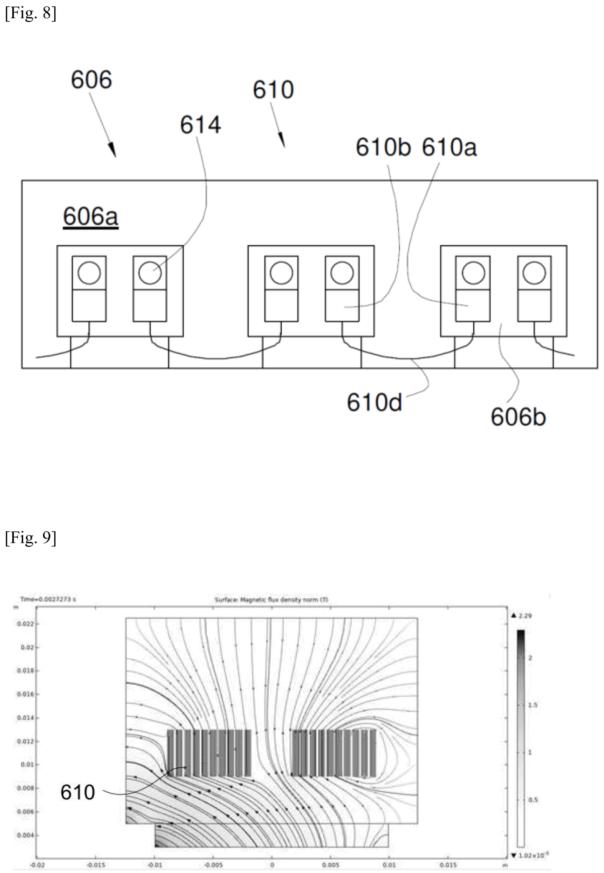

Comme schématiquement illustré sur les Figs. 7 et 8, un moteur supraconducteur de l'état de la technique comporte un rotor 602 qui présente un cœur de rotor 602a réalisé dans un matériau ferromagnétique tel que l'ensemble des alliages de fer utilisés pour les machines électriques. Le cœur de rotor 602a est globalement cylindrique et présente un alésage central dans lequel est emmanché et fixé rigidement un arbre moteur. L'arbre moteur est coaxial avec l'axe de révolution du cœur de rotor 602a, en superposition avec l'axe longitudinal du moteur supraconducteur.

Le rotor 602 comporte également des aimants permanents 604 portés par le cœur de rotor 602a. Il y a plusieurs aimants permanents 604 répartis angulairement et régulièrement en périphérie du cœur de rotor 602a et espacés les uns des autres. Par souci de simplicité, les aimants permanents ne sont pas détaillés sur la Fig. 7 et sont représentés par un seul élément. Le moteur supraconducteur comporte un stator 606 qui est disposé autour du rotor 602 et qui comporte un cœur de stator 606a réalisé dans un matériau ferromagnétique tel que l'ensemble des alliages de fer utilisés pour les machines électriques. Le cœur de stator 606a prend une forme globalement cylindrique creuse coaxiale avec l'axe longitudinal. Le cœur de stator 606a comporte des orifices 606b qui s'étendent parallèlement à l'axe longitudinal et qui vont par paire.

Le stator 606 comporte un ensemble de plusieurs bobines 610 portées par le cœur de stator 606a et réparties angulairement et régulièrement en périphérie interne du cœur de stator 606a (pour faire face à l'ensemble d'aimants permanents 604) et espacées les unes des autres. Les bobines 610 sont alimentées électriquement pour générer un champ magnétique entraînant en rotation le rotor 602 grâce aux aimants permanents 604.

Chaque bobine 610 est constituée d'un ruban en matériau supraconducteur formant ici une boucle avec, pour deux orifices 606b consécutifs angulairement, une première section rectiligne 610a traversant le premier orifice 606b, une deuxième section rectiligne 610b traversant le deuxième orifice 606b, deux sections courbes 610c-d où chacune relie entre elles une extrémité de la première section rectiligne 610a et une extrémité de la deuxième section rectiligne 610b.

Chaque orifice 606b est ainsi traversé par deux sections rectilignes 610a-b de deux bobines 610 consécutives et les deux sections rectilignes 610a-b sont disposées l'une à côté de l'autre. Pour limiter l'augmentation de température, une canalisation 614 est plaquée contre les sections rectilignes 610a-b et l'une des sections courbes 610c de chaque bobine 610 et un fluide caloporteur est transporté dans la canalisation 614. Les extrémités non connectées de la canalisation 614 permettent ici la connexion fluidique à un système de mise en mouvement du fluide caloporteur comme par exemple une pompe et un réservoir de fluide caloporteur.

En fonctionnement, chaque bobine 610 est alimentée électriquement par un courant alternatif pour générer un champ magnétique qui interagit avec les aimants permanents entraînant ainsi en rotation le rotor 602 et l'arbre moteur.

La Fig. 9 montre un graphe représentatif de la densité de flux magnétique au niveau d'un orifice 606b. La Fig. 9 montre qu'une partie de la bobine 610 est placée dans une zone où la densité est élevée (où les lignes de flux se resserrent) due à l'apport du flux magnétique de la bobine 610 et du flux des aimants permanents provenant de la partie rotative.

Dans un tel moteur supraconducteur, les pertes sont liées au courant maximal qui peut être injecté dans les bobines avant qu'elles deviennent résistives. Plus la valeur de ce courant maximal est importante, moins il y a de pertes. La valeur de ce courant maximal diminue avec le courant injecté dans la bobine et la densité de flux magnétiques qui s'applique sur la bobine. Ainsi, pour augmenter la puissance du moteur supraconducteur, il est souhaitable de diminuer la densité de flux magnétique appliquée. Avec l'arrangement de l'état de la technique, certaines des sections rectilignes qui sont dans les orifices sont soumises à une densité de flux magnétiques importante due au flux généré par la bobine et au flux généré par les aimants permanents, ce qui entraîne des pertes importantes. Il est donc souhaitable de trouver un arrangement qui améliore la situation.

### EXPOSÉ DE L'INVENTION

Un objet de la présente invention est de proposer un moteur supraconducteur dont l'agencement permet de réduire les pertes en modifiant la position des bobines par rapport au flux magnétique auquel elles sont soumises.

À cet effet, est proposé un moteur supraconducteur comportant :
- un rotor avec un cœur de rotor portant des aimants permanents et mobiles en rotation autour d'un axe longitudinal,
- un stator disposé à l'extérieur du rotor et comportant un cœur de stator traversé par des orifices répartis angulairement et régulièrement autour du rotor, et
- pour chaque orifice, deux bobines constituées d'un matériau supraconducteur et destinées à être alimentées électriquement pour générer un champ magnétique entraînant en rotation le rotor grâce aux aimants permanents, où chaque bobine comporte une première section rectiligne traversant ledit orifice, une deuxième section rectiligne traversant un autre orifice, et deux sections courbes où chacune relie entre elles une extrémité de la première section rectiligne et une extrémité de la deuxième section rectiligne, où les sections rectilignes des deux bobines traversant ledit orifice sont empilées radialement, où chaque orifice présente une zone avec une densité de flux magnétique élevée et une autre zone avec une densité de flux magnétique moins élevée et où l'empilement est disposé dans ladite autre zone.

La disposition particulière des bobines permet de limiter les pertes.

Selon un mode de réalisation particulier, lorsqu'une première section rectiligne d'une bobine est au niveau d'une couche extérieure, respectivement au niveau d'une couche intérieure, de son empilement, la deuxième section rectiligne de la même bobine est également au niveau d'une couche extérieure, respectivement au niveau d'une couche intérieure, de son empilement.

Avantageusement, pour deux sections rectilignes empilées dans un orifice, le moteur supraconducteur comporte une canalisation transportant un fluide caloporteur et disposée entre les deux sections rectilignes.

Selon un mode de réalisation particulier, lorsqu'une première section rectiligne d'une bobine est au niveau d'une couche extérieure de son empilement, la deuxième section rectiligne de la même bobine est au niveau d'une couche intérieure de son empilement et lorsqu'une première section rectiligne d'une bobine est au niveau d'une couche intérieure de son empilement, la deuxième section rectiligne de la même bobine est au niveau d'une couche extérieure de son empilement.

Avantageusement, pour chaque bobine, le moteur supraconducteur comporte une canalisation qui est accolée au moins en partie à l'extérieur de ladite bobine et qui transporte un fluide caloporteur.

Avantageusement, pour chaque bobine, le moteur supraconducteur comporte une canalisation qui est accolée au moins en partie à l'intérieur de ladite bobine et qui transporte un fluide caloporteur.

L'invention propose également un aéronef comprenant au moins un moteur supraconducteur dans l'une quelconque des réalisations présentées ci-dessus.

### BRÈVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant décrite en relation avec les dessins joints, parmi lesquels :
[Fig. 1] montre une vue de côté d'un aéronef selon l'invention,
[Fig. 2] montre une vue en coupe simplifiée d'un moteur supraconducteur selon un premier mode de réalisation de l'invention,
[Fig. 3] montre une vue en perspective d'une partie du moteur supraconducteur selon un deuxième mode de réalisation de l'invention,
[Fig. 4] montre une vue simplifiée et dans l'axe d'une partie du moteur supraconducteur selon le premier mode de réalisation de l'invention,
[Fig. 5] montre une vue simplifiée et dans l'axe d'une partie du moteur supraconducteur selon un deuxième mode de réalisation de l'invention,
[Fig. 6] montre un graphe représentatif de la distribution du flux magnétique dans un moteur supraconducteur selon l'invention,
[Fig. 7] montre une vue en perspective d'une partie d'un moteur supraconducteur de l'état de la technique,
[Fig. 8] montre une vue simplifiée et dans l'axe d'une partie du moteur supraconducteur de la Fig. 7, et
[Fig. 9] montre un graphe représentatif de la distribution du flux magnétique dans un moteur supraconducteur de l'état de la technique.

### EXPOSÉ DÉTAILLÉ DE MODES DE RÉALISATION

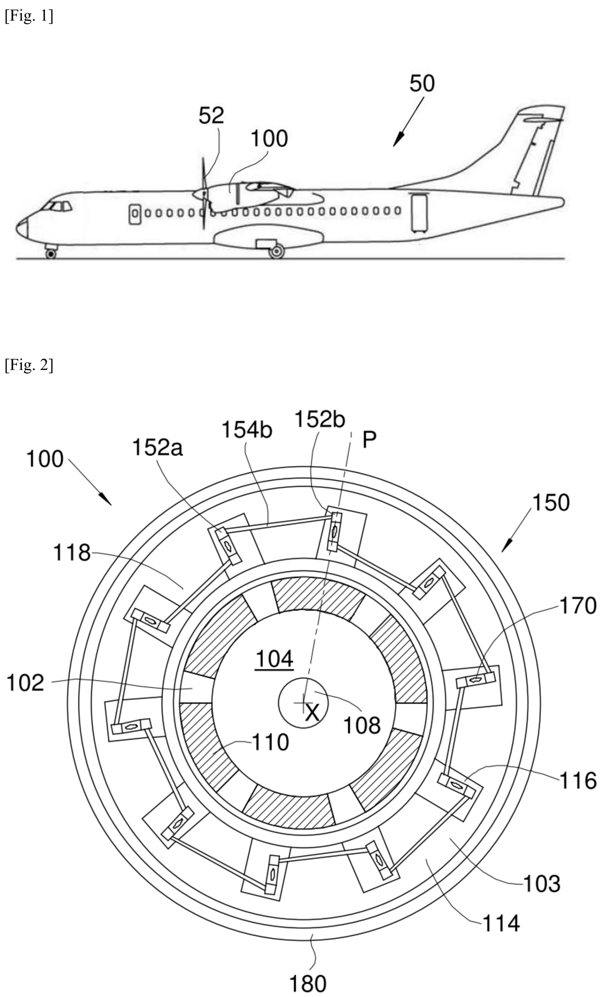

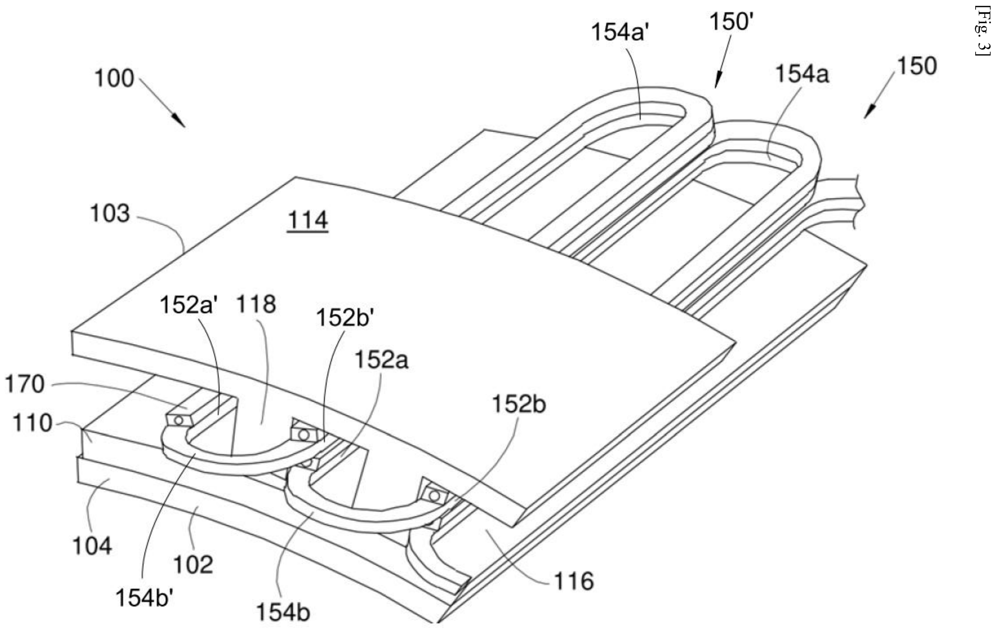

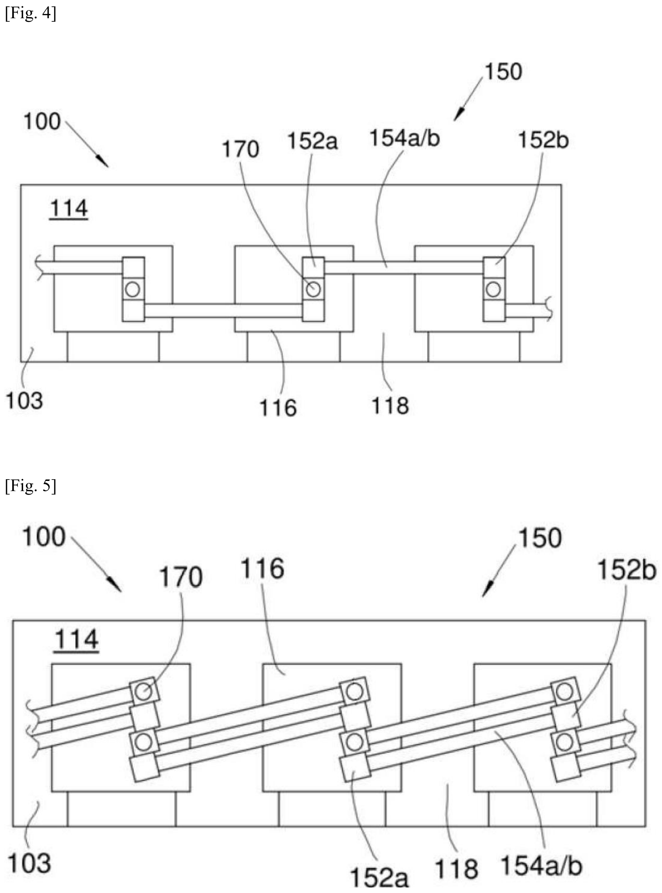

La Fig. 2 montre schématiquement un moteur supraconducteur 100 selon l'invention qui est globalement similaire à un moteur supraconducteur de l'état de la technique mais avec un arrangement particulier des bobines. La Fig. 3 et la Fig. 5 montrent une partie du moteur supraconducteur 100 selon le deuxième mode de réalisation et la Fig. 2 et la Fig.4 montrent une partie du moteur supraconducteur 100 selon le premier mode de réalisation.

Le moteur supraconducteur 100 comporte ainsi un rotor 102 avec un cœur de rotor 104 portant des aimants permanents 110. Le rotor 102 est mobile en rotation autour d'un axe longitudinal X et la Fig. 2 montre le moteur supraconducteur 100 en coupe par un plan perpendiculaire à l'axe longitudinal X. Sur les Figs. 4 et 5, le stator 103 est montré rectangulaire, mais il faut comprendre qu'il est arqué autour de l'axe longitudinal X.

Le cœur de rotor 104 est réalisé dans un matériau ferromagnétique tel que l'ensemble des alliages de fer utilisés pour les machines électriques. Le cœur de rotor 104 est cylindrique et coaxial avec l'axe longitudinal X et il présente un alésage central dans lequel est emmanché et fixé rigidement un arbre moteur 108 dudit moteur supraconducteur 100. L'arbre moteur 108 est coaxial avec l'axe longitudinal X.

Les aimants permanents 110 sont fixés au cœur de rotor 104 sur la périphérie de ce dernier. Il y a plusieurs aimants permanents 110 (ici au nombre de six) répartis angulairement et régulièrement autour du cœur de rotor 104 et espacés les uns des autres. Préférentiellement, les aimants permanents 110 sont magnétisés radialement par rapport à l'axe longitudinal X et de manière alternée de proche en proche. Pour des raisons de simplification, sur la Fig. 3, les aimants permanents 110 sont représentés sous la forme d'un seul élément.

Le moteur supraconducteur 100 comporte également un stator 103 disposé à l'extérieur du rotor 102 et comportant un cœur de stator 114 réalisé dans un matériau ferromagnétique tel que l'ensemble des alliages de fer utilisés pour les machines électriques. Le cœur de stator 114 prend une forme globalement cylindrique coaxiale avec l'axe longitudinal X.

Au niveau de sa face cylindrique qui est orientée vers le rotor 102, le cœur de stator 114 présente des orifices 116, ici en forme de fentes qui débouchent face au rotor 102. Selon un mode de réalisation non représenté, les orifices 116 peuvent être sous forme de tunnels traversant le cœur de stator 114. Les orifices 116 s'étendent parallèlement à l'axe longitudinal X.

Il y a plusieurs orifices 116 (ici au nombre de dix) qui sont répartis angulairement et régulièrement autour du rotor 102. Deux orifices 116 voisins sont séparés par une dent 118 monobloc et monomatière avec le cœur de stator 114. Dans le cas d'orifices 116 sous la forme de tunnel, les orifices 116 sont noyés dans le cœur de stator 114.

Le stator 103 comporte un agencement particulier de bobines 150 où une bobine 150 est installée entre deux orifices 116 voisins du cœur de stator 114.

Chaque bobine 150 est en matériau supraconducteur et elle est par exemple réalisée grâce à un ruban en matériau supraconducteur, enroulé sur lui-même pour former des spires globalement planes. Chaque bobine 150 est alimentée électriquement par une source d'alimentation électrique pour générer un champ magnétique entraînant en rotation le rotor 102 grâce aux aimants permanents 110.

Ainsi, comme montré sur la Fig. 3, pour chaque orifice 116, le moteur supraconducteur 100 comporte deux bobines 150, 150' dont une partie de chaque bobine 150, 150' est dans l'orifice 116 considéré et l'autre partie de chaque bobine 150, 150' est respectivement dans un orifice 116 amont et dans un orifice 116 aval autour de l'axe longitudinal X.

Chacune des deux bobines 150, 150' comporte une première section rectiligne 152a, 152b' qui traverse l'orifice 116 considéré parallèlement à l'axe longitudinal X, une deuxième section rectiligne 152b, 152a' qui traverse chacune un autre orifice 116 parallèlement à l'axe longitudinal X et deux sections courbes 154a-b, 154a'-b' qui sont hors des orifices 116. Chaque section courbe 154a-b, 154a'-b' relie entre elles une extrémité de la première section rectiligne 152a, 152a' et une extrémité de la deuxième section rectiligne 152b, 152b' de manière à former la boucle.

Selon l'invention, pour les deux bobines 150, 150' qui traversent le même orifice 116, une section rectiligne 152a, 152b' de chaque bobine 150 traverse ledit même orifice 116 et ses sections rectilignes 152a, 152b' sont empilées radialement, c'est-à-dire que les sections rectilignes 152a, 152b' sont disposées et superposées sur un même plan radial P passant globalement par l'axe longitudinal X.

Ainsi, dans chaque orifice 116, une section rectiligne 152a d'une bobine est empilée avec une section rectiligne d'une autre bobine présente dans cet autre orifice 116.

L'empilement des sections rectilignes 152a-b permet de libérer un espace vide dans chaque orifice 116 et par construction, chaque orifice 116 présente une zone avec une densité de flux magnétique élevée et une autre zone avec une densité de flux magnétique moins élevée et l'empilement des sections rectilignes est disposé dans ladite autre zone, c'est-à-dire celle avec la densité de flux magnétique la moins élevée permettant une limitation des pertes. Dans chaque orifice 116, il y a donc l'empilement avec les sections rectilignes 152a-b et l'espace vide qui est décalé angulairement par rapport à l'empilement.

On considère ici que l'empilement est donc radial et que la partie intérieure de l'empilement est orientée vers l'axe longitudinal X, c'est-à-dire vers l'intérieur du moteur supraconducteur 100 et que la partie extérieure de l'empilement est orientée à l'opposé de l'axe longitudinal X, c'est-à-dire vers l'extérieur du moteur supraconducteur 100, c'est-à-dire comme cela est représenté sur les Figs. 3 à 6.

L'empilement peut prendre deux formes différentes conformément au premier et au deuxième modes de réalisation de l'invention. Sur les Figs. 2 et 3, les empilements sont à gauche dans les orifices 116 alors que sur les Figs. 4 et 5, les empilements sont plutôt à droite dans les orifices 116. Le positionnement des empilements dans les orifices 116 peut être modifié en fonction de la géométrie du moteur supraconducteur 100 et de ses caractéristiques techniques provenant de sa construction.

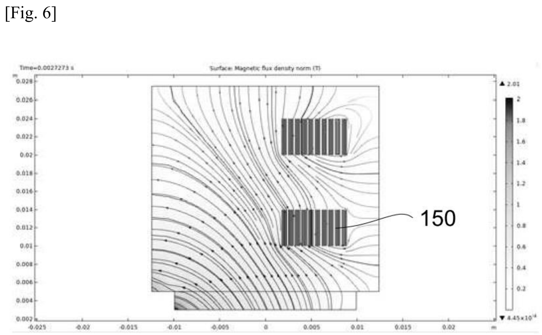

Ainsi, la Fig. 6 montre un graphe représentatif de la densité de flux magnétique au niveau d'un orifice 116. La Fig. 6 montre qu'aucune partie des bobines 150 n'est placée dans une zone de densité élevée. Ici, la zone de densité élevée est à gauche sur la Fig. 6 et l'empilement est alors disposé à droite pour ne pas baigner dans la zone de densité élevée.

Avec un tel arrangement, les bobines 150 ne sont plus soumises à un flux magnétique aussi important que dans le cas de l'état de la technique ce qui permet de diminuer les pertes. En outre, l'espace libéré dans les orifices 116 autorise une plus grande liberté dans la structure du support des bobines 150 et une meilleure isolation thermique.

En outre, comme les performances des bobines 150 dépendent de l'orientation du champ magnétique le choix entre le premier ou le deuxième mode de réalisation permet une liberté d'implémentation pour limiter encore plus les pertes.

Dans le premier mode de réalisation de l'invention représenté entre autres à la Fig. 4 et en considérant l'orifice 116 qui est au milieu, chaque bobine 150 est disposée entièrement sur un même niveau radialement, c'est-à-dire sur une couche intérieure ou sur une couche extérieure. La couche intérieure est orientée vers l'axe longitudinal X et la couche extérieure est orientée vers l'extérieur. La couche intérieure et la couche extérieure prennent chacune la forme d'une surface cylindrique autour de l'axe longitudinal X.

Ainsi, des premières sections courbes 154a-b relient entre elles les sections rectilignes 152a-b de leurs empilements respectifs qui sont au niveau de la couche intérieure et des deuxièmes sections courbes 154a-b relient entre elles les sections rectilignes 152a-b de leurs empilements respectifs au niveau de la couche extérieure.

Dans ce premier mode de réalisation, lorsqu'une première section rectiligne 152a d'une bobine 150 est au niveau de la couche extérieure (en partie haute sur la Fig. 4), respectivement au niveau de la couche intérieure (en partie basse sur la Fig. 4), de son empilement dans l'orifice 116 considéré, la deuxième section rectiligne 152b de la même bobine 150 est également au niveau de la couche extérieure, respectivement intérieur, de son empilement dans un autre orifice 116 voisin.

Dans le deuxième mode de réalisation de l'invention représenté entre autres à la Fig. 5 et en considérant l'orifice 116 qui est au milieu, chaque bobine 150 passe d'une couche intérieure vers une couche extérieure. La couche intérieure est orientée vers l'axe longitudinal X et la couche extérieure est orientée vers l'extérieur. La couche intérieure et la couche extérieure prennent chacune la forme d'une surface cylindrique autour de l'axe longitudinal X.

Ainsi, des premières sections courbes 154a-b relient entre elles une section rectiligne 152a de son empilement qui est au niveau de la couche intérieure avec une section rectiligne 152b de son empilement qui est au niveau de la couche extérieure, et des deuxièmes sections courbes 154a-b relient entre elles une section rectiligne 152a de son empilement qui est au niveau de la couche extérieure avec une section rectiligne 152b de son empilement qui est au niveau de la couche intérieure.

Dans ce deuxième mode de réalisation, lorsqu'une première section rectiligne 152a d'une bobine 150 est au niveau de la couche extérieure (en partie haute sur la Fig. 5) dans l'orifice 116 considéré, la deuxième section rectiligne 152b de la même bobine 150 est au niveau de la couche intérieure (en partie basse sur la Fig. 5) dans un autre orifice 116 voisin et lorsqu'une première section rectiligne 152a d'une bobine 150 est au niveau de la couche intérieure dans l'orifice 116 considéré, la deuxième section rectiligne 152b de la même bobine 150 est au niveau de la couche extérieure dans un autre orifice 116 voisin.

Pour limiter les augmentations de température, le moteur supraconducteur 100 comporte un système d'échangeur de chaleur. Le système d'échangeur de chaleur comporte des canalisations 170 qui serpentent le long des bobines 150 et qui transportent un fluide caloporteur qui provient d'un réservoir de fluide caloporteur et qui est entraîné par une pompe.

Dans le premier mode de réalisation de l'invention représenté à la Fig. 4, pour deux sections rectilignes 152a empilées dans un orifice 116, la canalisation 170 transportant le fluide caloporteur est disposée entre les deux sections rectilignes 152a. La canalisation 170 est ainsi au niveau d'une couche intermédiaire entre la couche extérieure et la couche intérieure.

Dans le deuxième mode de réalisation de l'invention représenté à la Fig. 3 et à la Fig. 5, pour chaque bobine 150, le moteur supraconducteur 100 comporte une canalisation 170 qui est accolée au moins en partie à l'extérieur de ladite bobine 150.

Ainsi, dans un orifice 116, pour la première section rectiligne 152a d'une bobine 150 qui est au niveau de la couche intérieure de son empilement, la canalisation 170 qui lui est associée est au niveau d'une couche intermédiaire entre cette première section rectiligne 152a et la première section rectiligne 152a de l'autre bobine 150 qui est au niveau de la couche extérieur de l'empilement. Toujours dans cet orifice 116, pour la première section rectiligne 152a de l'autre bobine 150 qui est au niveau de la couche extérieure de son empilement, la canalisation 170 qui lui est associée est au-delà de la couche extérieure, c'est-à-dire au niveau d'une couche encore plus à l'extérieur par rapport à la couche extérieure. Chaque canalisation 170 passe ainsi de la couche intermédiaire à la couche encore plus à l'extérieur.

Chaque canalisation 170 forme ici une boucle ouverte avec une partie courbe reliant deux parties rectilignes où la partie courbe suit une section courbe 154a de la bobine 150 associée et où chaque partie rectiligne suit une section rectiligne 152a-b de la bobine 150 associée. Un arrangement inverse est également possible avec la canalisation 170 qui est accolée au moins en partie à l'intérieur de la bobine 150 associée.

Comme pour l'état de la technique, ici, les extrémités libres des canalisations 170 sont fluidiquement connectées à un système de mise en mouvement du fluide caloporteur comportant entre autres la pompe et le réservoir de fluide caloporteur.

Le rotor 102 et le stator 103 sont logés ici dans un boîtier moteur 180 fermé à ses deux extrémités par des flancs dont au moins un est percé d'un orifice central permettant le passage de l'arbre moteur 108. Le stator 103 est monté fixe à l'intérieur du boîtier moteur 180 tandis que le rotor 102 et l'arbre moteur 108 sont montés libres en rotation à l'intérieur du boîtier moteur 180 par exemple à l'aide de paliers.

La Fig. 1 montre un aéronef 50 qui comporte au moins un moteur supraconducteur 100 selon l'invention par exemple pour entraîner une hélice 52 en rotation.

## Revendications

1. Moteur supraconducteur (100) comportant :
- un rotor (102) avec un cœur de rotor (104) portant des aimants permanents (110) et mobiles en rotation autour d'un axe longitudinal (X),
- un stator (103) disposé à l'extérieur du rotor (102) et comportant un cœur de stator (114) traversé par des orifices (116) répartis angulairement et régulièrement autour du rotor (102), et
- pour chaque orifice (116), deux bobines (150) constituées d'un matériau supraconducteur et destinées à être alimentées électriquement pour générer un champ magnétique entraînant en rotation le rotor (102) grâce aux aimants permanents (110), où chaque bobine (150) comporte une première section rectiligne (152a) traversant ledit orifice (116), une deuxième section rectiligne (152b) traversant un autre orifice (116), et deux sections courbes (154a-b), où chacune relie entre elles une extrémité de la première section rectiligne (152a) et une extrémité de la deuxième section rectiligne (152b), où les sections rectilignes (152a) des deux bobines (150) traversant ledit orifice (116) sont empilées radialement, où chaque orifice (116) présente une zone avec une densité de flux magnétique élevée et une autre zone avec une densité de flux magnétique moins élevée et où l'empilement est disposé dans ladite autre zone.

2. Moteur supraconducteur (100) selon la revendication 1, **caractérisé en ce que** lorsqu'une première section rectiligne (152a) d'une bobine (150) est au niveau d'une couche extérieure, respectivement d'une couche intérieure, de son empilement, la deuxième section rectiligne (152b) de la même bobine (150) est également au niveau de la couche extérieure, respectivement au niveau de la couche intérieure, de son empilement.

3. Moteur supraconducteur (100) selon la revendication 2, **caractérisé en ce que** pour deux sections rectilignes (152a) empilées dans un orifice (116), le moteur supraconducteur (100) comporte une canalisation (170) transportant un fluide caloporteur et disposée entre les deux sections rectilignes (152a).

4. Moteur supraconducteur (100) selon la revendication 1, **caractérisé en ce que** lorsqu'une première section rectiligne (152a) d'une bobine (150) est au niveau d'une couche extérieure de son empilement, la deuxième section rectiligne (152b) de la même bobine (150) est au niveau d'une couche intérieure de son empilement et lorsqu'une première section rectiligne (152a) d'une bobine (150) est au niveau d'une couche intérieure de son empilement, la deuxième section rectiligne (152b) de la même bobine (150) est au niveau d'une couche extérieure de son empilement.

5. Moteur supraconducteur (100) selon la revendication 4, **caractérisé en ce que** pour chaque bobine (150), le moteur supraconducteur (100) comporte une canalisation (170) qui est accolée au moins en partie à l'extérieur de ladite bobine (150) et qui transporte un fluide caloporteur.

6. Moteur supraconducteur (100) selon la revendication 4, **caractérisé en ce que** pour chaque bobine (150), le moteur supraconducteur (100) comporte une canalisation (170) qui est accolée au moins en partie à l'intérieur de ladite bobine (150) et qui transporte un fluide caloporteur.

7. Aéronef (50) comprenant au moins un moteur supraconducteur (100) selon l'une quelconque des revendications précédentes.
